# EUROPÄISCHE PATENTANMELDUNG

(11) **EP 1 241 154 A2**
(43) Veröffentlichungstag der Anmeldung: **18.09.2002**
(21) Anmeldenummer: 02005812.9
(22) Anmeldetag: 14.03.2002
(51) Int. Cl.: C07C 4/06, C10G 11/05

(54) **Verfahren zur Gewinnung von Kohlenwasserstoffprodukten durch thermische Dampfspaltung und nachfolgende katalytische Behandlung**

(30) Priorität: 17.03.2001 DE 10113041
(71) Anmelder: Linde Aktiengesellschaft, 65189 Wiesbaden (DE)
(72) Erfinder: Bölt, Heinz, 82515 Wolfratshausen (DE)

(57) **Zusammenfassung**

Es wird ein Verfahren zur Gewinnung von Kohlenwasserstoffprodukten, insbesondere Olefinen, durch thermische Dampfspaltung (steam cracking) von Kohlenwasserstoffe enthaltenden Einsätzen, z. B. Erdölfraktionen, beschrieben. Zumindest ein Teil der dabei erzeugten Spaltprodukte wird mittels eines Katalysators nachbehandelt. Um eine möglichst wirtschaftliche Regenerierung des Katalysators zu ermöglichen, wird vorgeschlagen, zur Regenerierung des Katalysators einen zumindest zeitweise mit einem sauerstoffhaltigen Gas oder Gasgemisch, z. B. Luft, versetzten Wasserdampfstrom über den Katalysator zu leiten.

## Beschreibung

Die Erfindung betrifft ein Verfahren zur Gewinnung von Kohlenwasserstoffprodukten, insbesondere Olefinen, durch thermische Dampfspaltung (steam cracking) von Kohlenwasserstoffe enthaltenden Einsätzen, z. B. Erdölfraktionen, und Nachbehandlung zumindest eines Teils der dabei erzeugten Spaltprodukte mittels eines Katalysators.

Eine gängige Methode zur Herstellung von Olefinen, die z. B. als Grundstoffe für die chemische Industrie dienen, besteht in der thermischen Dampfspaltung, dem sogenannten steam cracking, von Kohlenwasserstoffen enthaltenden Einsätzen. Dabei werden die Einsätze, die z. B. aus Erdölfraktionen bestehen, üblicherweise mit Dampf vermischt durch Spaltrohre geleitet, welche in einem beheizten Spaltofen angeordnet sind. In den Spaltrohren werden die Kohlenwasserstoffe thermisch gespalten, wobei ein breites Spektrum an Kohlenwasserstoffverbindungen entsteht. Sofern die gewünschten Kohlenwasserstoffprodukte nicht durch einfache Fraktionierung des im Spaltofen erzeugten Kohlenwasserstoffgemisches in ausreichender Menge erhalten werden können, wird häufig eine katalytische Nachbehandlung angewandt, um unerwünschte Kohlenwasserstoffverbindungen in erwünschte Kohlenwasserstoffverbindungen umzuwandeln. Beispielsweise können aromatische Kohlenwasserstoffe gegebenenfalls in mehreren Schritten katalytisch in kettenförmige Kohlenwasserstoffe konvertiert werden oder höhermolekulare Kohlenwasserstoffe katalytisch in niedermolekulare Kohlenwasserstoffe gespalten werden.

Eine katalytische Nachbehandlung des bei der thermischen Dampfspaltung erzeugten Spaltproduktgemisches ist insbesondere deshalb erwünscht, weil das Spaltproduktgemisch zu einem großen Teil höhermolekulare Kohlenwasserstoffe, wie z. B. C₄― bis C₇―Olefine (Buten, Penten, Hexen oder Aromaten etc.) enthält, während von der petrochemischen Industrie zunehmend niedermolekulare Kohlenwasserstoffe, insbesondere C₂― bis C₄―Olefine, vor allem Ethen (Ethylen) und Propen (Propylen), nachgefragt werden. Um eine Verschiebung des Produktspektrums von den C₄― bis C₇―Olefinen hin zu den C₂― bis C₄―Olefinen zu erreichen, wurde das sogenannte Propylur-Verfahren entwickelt, das in "Hydrocarbon Engineering May 1999, Seite 66-68" und in der EP0844 224 A1 beschrieben ist. Bei diesem Verfahren wird das insbesondere durch thermische Dampfspaltung von Kohlenwasserstoffeinsätzen erzeugte Gemisch aus überwiegend C₄― bis C₇―Olefinen in einen Reaktor geleitet, der eine Schüttung aus körnigem, formselektiven Zeolith-Katalysator enthält. Dem Reaktor kann schließlich ein Produktgemisch entnommen werden, das überwiegend C₂― bis C₄―Olefine enthält.

Da der Katalysator während des Betriebs durch Ablagerungen, insbesondere Koksablagerungen, an Aktivität verliert, muss er von Zeit zu Zeit regeneriert werden. Hierzu wird der Katalysator mit einem Stickstoffstrom beaufschlagt, dem geringe Mengen an Luft zugemischt werden. Da für die Regenerierung eine bestimmte, relativ hohe Stickstoffmenge benötigt wird, ist ein aufwendiger Stickstoffkreislauf mit Kreislaufverdichter, Abscheider etc. erforderlich. Dies erhöht den Investitionsaufwand für die katalytische Nachbehandlung erheblich.

Der vorliegenden Erfindung liegt daher die Aufgabe zugrunde, ein Verfahren der eingangs genannten Art so auszugestalten, dass eine wirtschaftliche Regenerierung des Katalysators ermöglicht wird.

Diese Aufgabe wird erfindungsgemäß dadurch gelöst, dass zur Regenerierung des Katalysators anstelle des mit Sauerstoff versetzten Stickstoffstroms ein zumindest zeitweise mit einem sauerstoffhaltigen Gas oder Gasgemisch versetzter Wasserdampfstrom über den Katalysator geleitet wird.

Dabei kann der Katalysator für alle denkbaren Nachbehandlungen der durch thermische Dampfspaltung erzeugten Spaltprodukte vorgesehen sein. Beispielsweise kann es sich um eine katalytische Spaltung von aromatischen Kohlenwasserstoffen oder um eine katalytische Spaltung von höhermolekularen kettenförmigen Kohlenwasserstoffen in niedrigmolekulare kettenförmige Kohlenwasserstoffe handeln. Das erfindungsgemäße Verfahren kann prinzipiell bei allen katalytischen Nachbehandlungen nach einer thermischen Dampfspaltung eingesetzt werden, bei denen der Katalysator regeneriert werden muss. Dabei kann die Regenerierung nach bestimmten zeitlichen Abständen, in Abhängigkeit von der tatsächlichen Inaktivierung des Katalysators oder auch kontinuierlich während der katalytischen Umsetzung erfolgen.

Mit besonderem Vorteil wird die Erfindung bei dem eingangs beschriebenen sogenannten Propylur-Verfahren in Kombination mit der thermischen Dampfspaltung in einem Spaltofen (steam cracker) eingesetzt. Dabei handelt es sich um ein Verfahren zur Gewinnung von C₂― bis C₄―Olefinen aus Kohlenwasserstoffe enthaltenden Einsätzen, z. B. Erdölfraktionen, wobei der Einsatz durch einen Spaltofen (steam cracker) geführt wird, in dem aus dem Einsatz durch thermische Dampfspaltung (steam cracking) ein C₄― bis C₇―Olefine enthaltendes Gemisch aus Spaltprodukten erzeugt wird. Zumindest ein Teil des so erzeugten Gemisches wird in einen einen formselektiven Zeolith-Katalysator enthaltenden Reaktor eingeleitet. Schließlich wird aus dem Reaktor ein C₂― bis C₄―Olefine enthaltendes Produktgemisch abgezogen.

Bei einem derartigen Verfahren wird die gestellte Aufgabe erfindungsgemäß dadurch gelöst, dass zur Regenerierung des formselektiven Zeolith-Katalysators ein zumindest zeitweise mit einem sauerstoffhaltigen Gas oder Gasgemisch versetzter Wasserdampfstrom durch den Reaktor geleitet wird.

Der Erfindung liegt dabei die Erkenntnis zugrunde, dass zur Regenerierung des Katalysators anstelle eines mit Sauerstoff versetzten Stickstoffstromes auch ein mit Sauerstoff versetzter Wasserdampfstrom verwendet werden kann. In der Regel reichen geringe Mengen von Sauerstoff aus, um eine Regenerierung des Katalysators durch Abbrennen der Ablagerungen auf dem Katalysator zu bewirken. Am einfachsten kann der Sauerstoff durch Zumischen von Luft zum Wasserdampfstrom zugegeben werden. Gemäß einer Weiterbildung des Erfindungsgedankens wird technisch reiner Sauerstoff oder ein Gas oder Gasgemisch, welches technisch reinen Sauerstoff enthält, in den Wasserdampfstrom eingespeist. Der Wasserdampfstrom hat unter anderem die Aufgabe, die beim Abbrand der Ablagerungen auf dem Katalysator entstehende Wärme abzuführen. Wie sich herausgestellt hat, erfüllt Wasserdampf diese Aufgabe genauso erfolgreich, wie Stickstoff. Von Vorteil ist dabei auch, dass Wasserdampf inert ist. Im Gegensatz zu Stickstoff steht Wasserdampf allerdings im Prozess ohnehin zur Verfügung. Deshalb ist auch keine Kreislaufführung mit aufwendigen Verschaltungen wie bei der Verwendung von Stickstoff zwingend erforderlich. Der Wasserdampf kann einfach an die Atmosphäre abgegeben oder kondensiert und wieder zurückgeführt werden. In Abhängigkeit von spezifischen Betriebsmittelbewertungen kann es jedoch vorteilhaft sein, mit dem Wasserdampf einen Regenerierkreislauf zu betreiben.

Gemäß einer besonders bevorzugten Ausführungsform der Erfindung wird der Wasserdampfstrom durch Prozessdampf aus der thermischen Dampfspaltung gebildet. In diesem Fall werden die Vorteile der Erfindung ganz besonders deutlich, da zur thermischen Dampfspaltung im Spaltofen ohnehin ein sehr großes Prozessdampfsystem zur Verfügung steht, welches zur Regenerierung des Katalysators angezapft werden kann.

Sofern bei der katalytischen Nachbehandlung Prozessdampf eingesetzt wird, kann es auch vorteilhaft sein, den Wasserdampfstrom für die Regenerierung durch Prozessdampf aus der katalytischen Nachbehandlung zu bilden.

Zweckmäßigerweise werden Temperatur, Volumenstrom und Sauerstoffgehalt des Wasserdampfstroms so eingestellt, dass ein kontrolliertes Abbrennen von Koksablagerungen auf dem Katalysator erreicht wird. Insbesondere werden Temperatur- und Sauerstoffgehalt des Wasserdampfstroms derart abgestimmt, dass die Zündtemperatur der Koksablagerungen erreicht wird. Durch Einstellung des Volumenstroms des Wasserdampfstromes wird für eine ausreichende Wärmeabfuhr gesorgt, damit es nicht zu unerwünschten Temperaturspitzen im Katalysator und somit zu einer Schädigung des Katalysators kommt. Die Regenerierung des Katalysators ist vorzugsweise bedarfsabhängig gesteuert, d. h. die Regenerierung wird dann eingeleitet, wenn die Aktivität des Katalysators einen bestimmten Grenzwert unterschreitet. Zweckmäßigerweise wechseln aktive Phasen, in denen der Katalysator katalytisch aktiv ist, mit Regenerierphasen, in denen der Katalysator durch Einleiten des sauerstoffhaltigen Wasserdampfstroms regeneriert wird, ab. Vorteilhafterweise erfolgt die Regenerierung des Katalysators in zeitlichen Abständen von 500 bis 1.500 Stunden.

Das erfindungsgemäße Verfahren weist wesentliche Vorteile gegenüber dem Stand der Technik auf:

Da der gesamte Stickstoffkreislauf entfallen kann, verringern sich die Investitionskosten für die katalytische Nachbehandlung erheblich. Außerdem ist kein teurer Stickstoff zur Regenerierung des Katalysators erforderlich. Somit reduzieren sich auch die Betriebsmitteilkosten. Insgesamt wird mit der Erfindung eine besonders wirtschaftliche Möglichkeit zur Regenerierung von Katalysatoren geschaffen, welche zur Nachbehandlung von Spaltprodukten aus der thermischen Dampfspaltung eingesetzt werden.

## Patentansprüche

1. Verfahren zur Gewinnung von Kohlenwasserstoffprodukten, insbesondere Olefinen, durch thermische Dampfspaltung (steam cracking) von Kohlenwasserstoffe enthaltenden Einsätzen, z. B. Erdölfraktionen, und Nachbehandlung zumindest eines Teils der dabei erzeugten Spaltprodukte mittels eines Katalysators, **dadurch gekennzeichnet, dass** zur Regenerierung des Katalysators ein zumindest zeitweise mit einem sauerstoffhaltigen Gas oder Gasgemisch versetzter Wasserdampfstrom über den Katalysator geleitet wird.

2. Verfahren zur Gewinnung von C₂― bis C₄―Olefinen aus Kohlenwasserstoffe enthaltenden Einsätzen, z. B. Erdölfraktionen, wobei der Einsatz durch einen Spaltofen (steam cracker) geführt wird, in dem aus dem Einsatz durch thermische Dampfspaltung (steam cracking) ein C₄― bis C₇― Olefine enthaltendes Gemisch aus Spaltprodukten erzeugt wird, zumindest ein Teil des erzeugten Gemisches in einen einen formselektiven Zeolith-Katalysator enthaltenden Reaktor eingeleitet wird und ein C₂― bis C₄― Olefine enthaltendes Produktgemisch aus dem Reaktor abgezogen wird, **dadurch gekennzeichnet, dass** zur Regenerierung des formselektiven Zeolith-Katalysators ein zumindest zeitweise mit einem sauerstoffhaltigen Gas oder Gasgemisch versetzter Wasserdampfstrom durch den Reaktor geleitet wird.

3. Verfahren nach Anspruch 1 oder 2, **dadurch gekennzeichnet, dass** der Wasserdampfstrom durch Prozessdampf aus der thermischen Dampfspaltung gebildet wird.

4. Verfahren nach Anspruch 1 oder 2, **dadurch gekennzeichnet, dass** der Wasserdampfstrom durch Prozessdampf aus der katalytischen Nachbehandlung gebildet wird.

5. Verfahren nach einem der Ansprüche 1 bis 4, **dadurch gekennzeichnet, dass** der Wasserdampfstrom im Kreislauf geführt wird.

6. Verfahren nach einem der Ansprüche 1 bis 5, **dadurch gekennzeichnet, dass** Temperatur, Volumenstrom und Sauerstoffgehalt des Wasserdampfstromes so eingestellt werden, dass ein kontrolliertes Abbrennen von Koksablagerungen auf dem Katalysator erreicht wird.

7. Verfahren nach einem der Ansprüche 1 bis 6, **dadurch gekennzeichnet, dass** die Regenerierung des Katalysators in zeitlichen Abständen von 500 bis 1.500 Stunden erfolgt.
